# EUROPEAN PATENT SPECIFICATION

(11) **EP 3 337 331 B1**
(45) Date of publication and mention of the grant of the patent: **26.05.2021**
(21) Application number: 16840200.6
(22) Date of filing: 26.08.2016
(51) Int. Cl.: A23C 9/12, A23C 9/133, A23L 2/02, A23L 2/385, A23L 2/52, A23L 33/21

(54) **VISCOSITY REDUCTION OF BEVERAGES AND FOODS CONTAINING HIGH FIBER FRUIT AND VEGETABLE MATERIALS**
VISKOSITÄTSVERRINGERUNG VON GETRÄNKEN UND NAHRUNGSMITTELN MIT BALLASTSTOFFREICHEM OBST UND GEMÜSE
RÉDUCTION DE LA VISCOSITÉ DE BOISSONS ET D'ALIMENTS CONTENANT DES MATIÈRES À BASE DE FRUITS ET DE LÉGUMES RICHES EN FIBRES

(30) Priority: 26.08.2015 US 201562210261 P; 06.06.2016 US 201662346077 P; 24.08.2016 US 201662378953 P; 25.08.2016 US 201615247411
(43) Date of publication of application: 27.06.2018
(73) Proprietor: Tropicana Products, Inc., Bradenton, FL 34208 (US)
(72) Inventor: BRIJWANI, Khushal, Hawthorne, NY 10532 (US); HAVLIK, Steven, E., Rolling Meadows, IL 60008 (US); JORDAN, Rachel, L., Palatine, IL 60067 (US); SCHUETTE, John, Woodstock, IL 60010 (US); SHIN, Jin-E, Hoffman Estates, IL 60192 (US); SONG, Brian, Hoffman Estates, IL (US)
(74) Representative: Harris, Oliver John Richard
(86) International application number: PCT/US2016/048947
(87) International publication number: WO 2017/035458

(56) References cited:
- CN-A- 101 669 550
- KR-A- 20120 010 680
- US-A- 5 007 334
- US-A1- 2010 119 650
- US-A1- 2011 250 314
- US-A1- 2012 088 015
- US-A1- 2012 135 109
- US-A1- 2014 234 476
- US-B2- 8 673 382
- JAN OSZMIASKI ET AL: "Effect of pectinase treatment on extraction of antioxidant phenols from pomace, for the production of puree-enriched cloudy apple juices", FOOD CHEMISTRY, ELSEVIER LTD, NL, vol. 127, no. 2, 18 January 2011 (2011-01-18), pages 623-631, XP028365660, ISSN: 0308-8146, DOI: 10.1016/J.FOODCHEM.2011.01.056 [retrieved on 2011-01-23]

## Description

### FIELD OF THE INVENTION

The present invention relates generally to beverage products containing enzymatically-treated high fiber fruit and vegetable material (pomace). The beverage products exhibit a significantly reduced viscosity when compared to beverage products containing non-enzymatically-treated high fiber fruit and vegetable materials, and the fiber content of the high fiber fruit and vegetable materials remains the same pre and post enzymatic treatment.

### BACKGROUND

Fruit and vegetable based products, especially juices and beverages, are popular among consumers as a healthy comestible and a means to meet their daily recommended amounts of fruits and vegetables. However, some food and vegetable based products lack the nutrients contained in the whole fruit or vegetable. For example, due to the juice extraction process, portions of the whole fruit or vegetable, such as cellulosic materials, membranes, pulp, etc., are excluded from the juice that would otherwise be consumed if the fruit or vegetable were eaten whole.

Various attempts have been made to supplement fruit and vegetable juices to incorporate these lost nutrients back into the fruit and/or vegetable product. For example, US 2014/0234476 discloses addition of comminuted and/or pasteurized edible co-products from juice extraction of fruit and/or vegetables into beverages to enhance nutrition. Oszmianski et al (Food Chem. 2011. 127: 623-631) is concerned with enriching cloudy apple juice with phytochemicals such as polyphenols from a puree derived from enzymatically-processed pomace. In addition, various extracts and fiber powders obtained from edible and/or typically inedible portions of foods are commercially available. For example, US 2011/0250314 discloses a process for producing a supplement from fruit involving treatment of cranberries with enzymes to release nutritional components bound in the cell walls. US 2012/0135109 discloses a method for producing a fiber extract by breaking apart plant cell walls of fruit or vegetable byproducts to extract nutrients. However, such extracts and powders tend to impart an undesirable flavor to the juice. Moreover, they may dissolve so thoroughly that a consumer has difficulty believing that the juice does in fact contain the added fiber. Efforts to incorporate large pieces of insoluble fibers into juice have generally resulted in the inclusion of undesired color, flavor, and fibrous textures to the juice product. In addition, this takes longer time for hydration to be incorporated into juice or beverage. The thickness or viscosity of the juice, coupled with the appearance and mouthfeel associated with incorporating a substantial amount of the fibrous/solid materials into the product, pose the most problems from a consumer acceptability standpoint as well as a product processing standpoint.

The application of nutritious and fibrous components to finished products has been limited due primarily to the consumer's perception of the finished products containing the fibrous components as something other than juice (such as a smoothie or some other product containing a thick consistency).

Others in the industry have tried numerous methods to reduce the viscosity of beverages containing high-fiber fruit or vegetable materials. For example, US 2010/0119650, which is concerned with a pourable food product such as a salad dressing which has an enhanced fibre content, teaches processing - which can involve enzymatic processing- of a fibre-containing whole food, such as a whole fruit or vegetable, to reduce viscosity. Exemplary methods to reduce viscosity include chemical hydrolysis and mechanical technologies. Although these methodologies reduce the viscosity of the high fiber fruit or vegetable materials, they are disadvantageous in the food and beverage industry for a variety of reasons. For instance, chemical hydrolysis subjects high fiber fruit or vegetable materials to chemicals, such as formic acid and hydrochloric acid, resulting in non-specific reactions whereby the chemicals react with glycosidic bonds in fiber and thus the fiber and sugar identities are not retained. Moreover, few food-grade chemicals are candidates for such use. A stigma is also attached to chemicallytreated products as not being fresh or natural and such products may even be considered unhealthy.

Mechanical technologies to reduce the viscosity of the pomace, such as homogenization and micronization, cannot break down the fiber into a smaller chain size. Although the fibers may be pulverized or micronized, the chain length of the fibers remain intact, and thus, this method cannot deliver the same amount of fiber nor can it reduce viscosity of the fiber-containing pomace to the point where it is not detectable by the consumer.

### SUMMARY OF THE INVENTION

In general, the disclosure herein relates to a low viscosity beverage comprising juice and pomace or other high fiber by-products from fruits or vegetables (hereinafter collectively "pomace"). The invention is defined by the subject-matter of the claims.

In a first aspect, the invention provides a beverage product comprising liquid; and 25-40% enzymatically-treated pomace, wherein the enzymatically treated pomace is derived from pomace selected from a group consisting of at least one fruit, at least one vegetable or a combination thereof; wherein the beverage product has a viscosity measured with spindle #2 of a Brookfield viscometer at 20 r.p.m of between 700-1800 cP at 20°C; and wherein the beverage product comprises at least 1 wt% fiber.

In some embodiments, the beverage product comprises 36 wt% enzymatically-treated pomace, and has a viscosity measured with spindle #2 of a Brookfield viscometer at 20 r.p.m of between 1300-1500 cP at 20 °C.

In a second aspect there is provided a beverage product comprising liquid; 25-40% wt% enzymatically-treated pomace, wherein the enzymatically treated pomace is derived from pomace selected from a group consisting of at least one fruit, at least one vegetable or a combination thereof; and 1-40% of a viscous ingredient and/or 1-20 wt% of a viscosity-building ingredient; wherein the beverage product has a viscosity measured with spindle #5 of a Brookfield viscometer at 20 rpm of between 2000-4000 cP at 20 °C; and wherein the beverage product comprises at least 1 wt% fiber.

In some embodiments the liquid in beverage products according to the first or second aspects may comprise a juice, preferably wherein the juice is selected from a group comprising orange, pineapple, apple, mango, cranberry, grapefruit, blueberry, acai, strawberry, grape, passion fruit, tomato, cucumber, kale, spinach, broccoli, carrot, lemons, limes, tangerine, mandarin orange, tangelo, pomelo, celery, beets, lettuce, spinach, cabbage, artichoke, broccoli, Brussels sprouts, cauliflower, watercress, peas, beans, lentils, asparagus, radish, peach, banana, pear, guava, apricot, watermelon, pomegranate, blackberry, papaya, lychee, plum, prune, fig and a combination thereof, optionally the beverage product further comprises at least one grain, and further optionally the liquid further comprises dairy.

In some embodiments the enzymatically-treated pomace in beverage products according to the first or second aspects is obtained by treating the pomace with enzymes selected from the group consisting of pectinase, cellulase, hemicellulase or a combination thereof. In some embodiments, the pomace is derived from at least one fruit or vegetable selected from the group comprising orange, pineapple, apple, mango, cranberry, grapefruit, blueberry, acai, strawberry, grape, passion fruit, tomato, lemons, limes, tangerine, mandarin orange, tangelo, pomelo, peach, banana, pear, guava, apricot, watermelon, pomegranate, blackberry, papaya, lychee, plum, prune, fig, cucumber, kale, spinach, broccoli, carrot, celery, beets, lettuce, spinach, cabbage, artichoke, coconut, broccoli, Brussels sprouts, cauliflower, watercress, peas, beans, lentils, asparagus, radish, wheat grass and a combination thereof.

In some embodiments beverage products according to the first or second aspects are reduced calorie beverages comprising a non-nutritive sweetener, wherein a taste profile of the reduced calorie beverage product is similar to a full-calorie beverage lacking the non-nutritive sweetener.

In a third aspect there is provided a method comprising subjecting pomace, selected from a group consisting of at least one fruit, at least one vegetable, or a combination thereof, to at least one enzyme to form a pomace-enzyme mixture, wherein the pomace comprises fiber and the pomace-enzyme mixture comprises the at least one enzyme in an amount between 0.15-1.0 wt% of the pomace; heating the pomace-enzyme mixture to 25-57°C for 10-60 minutes; and deactivating the at least one enzyme to form the enzymatically-treated pomace; wherein the enzymatically-treated pomace comprises an amount of fiber that is the same before and after enzymatic treatment and wherein the fiber in the enzymatically-treated pomace has a shorter chain length than native fiber in the pomace before enzymatic treatment; the method further comprising adding the enzymatically-treated pomace to liquid to form a beverage product comprising at least 1 wt% fiber, wherein the enzymatically-treated pomace is added in an amount between 25-40 wt% of the beverage product, and wherein the viscosity of the beverage product, measured with spindle #2 of a Brookfield viscometer at 20 r.p.m is 700-1800 cP measured at 20°C, optionally wherein the amount of enzymatically-treated pomace is 36 wt% of the beverage product, and wherein the viscosity, measured with spindle #2 of a Brookfield viscometer at 20 r.p.m, of the beverage product is between 1300-1500 cP at 20°C.

In a fourth aspect there is provided a method comprising subjecting pomace, selected from a group consisting of at least one fruit, at least one vegetable, or a combination thereof, to at least one enzyme to form a pomace-enzyme mixture, wherein the pomace comprises fiber and the pomace-enzyme mixture comprises the at least one enzyme in an amount between 0.15-1.0 wt% of the pomace; heating the pomace-enzyme mixture to 25-57°C for 10-60 minutes; and deactivating the at least one enzyme to form the enzymatically-treated pomace; wherein the enzymatically-treated pomace comprises an amount of fiber that is the same before and after enzymatic treatment and wherein the fiber in the enzymatically-treated pomace has a shorter chain length than native fiber in the pomace before enzymatic treatment; the method further comprising adding a) a viscous ingredient and/or a viscosity-building ingredient and b) the enzymatically-treated pomace to a liquid to form a beverage product comprising at least 1 wt% fiber, wherein the enzymatically-treated pomace is added in an amount between 25-40 wt% of the beverage product, wherein any viscous ingredient is added in an amount between 1-40 wt% of the beverage product and any viscosity-building ingredient is added in an amount of 1-20 wt% of the beverage product, and wherein the viscosity of the beverage product, measured with spindle #5 of a Brookfield viscometer at 20 r.p.m is 2000-4000 cP measured at 20°C.

In some embodiments according to the third or fourth aspects, the range of the at least one enzyme is between 0.15-0.75 wt% of the pomace, optionally the methods further comprise agitating the pomace-enzyme mixture during the heating step.

In some embodiments according to the third or fourth aspects, the pomace contains a fiber content of between 3-8 wt%.

In some embodiments according to the third or fourth aspects, the enzyme is pectinase, hemicellulase, cellulase, or any combination thereof.

In some embodiments according to the third or fourth aspects, the methods further comprise deactivating the enzyme by heating the pomace-enzyme mixture to 75-107°C for 6-600 seconds.

In some embodiments according to the third or fourth aspects, the methods further comprise reducing a particle size of the enzymatically-treated pomace, optionally wherein the particle size of the enzyme-treated pomace is reduced by processes selected from the group consisting of micronization, homogenization, or a combination thereof.

In some embodiments of methods according to the third and fourth aspects, the liquid comprises a juice, preferably wherein the juice is selected from a group comprising orange, pineapple, apple, mango, cranberry, grapefruit, blueberry, acai, strawberry, grape, passion fruit, tomato, cucumber, kale, spinach, broccoli, carrot, lemons, limes, tangerine, mandarin orange, tangelo, pomelo, celery, beets, lettuce, spinach, cabage, artichoke, broccoli, Brussels sprouts, cauliflower, watercress, peas, beans, lentils, asparagus, radish, peach, banana, pear, guava, apricot, watermelon, pomegranate, blackberry, papaya, lychee, plum, prune, fig and a combination thereof, optionally wherein the beverage product further comprises at least one grain, and further optionally wherein the liquid further comprises dairy; and/or the pomace is derived from at least one fruit or vegetable selected from the group comprising orange, pineapple, apple, mango, cranberry, grapefruit, blueberry, acai, strawberry, grape, passion fruit, tomato, lemons, limes, tangerine, mandarin orange, tangelo, pomelo, peach, banana, pear, guava, apricot, watermelon, pomegranate, blackberry, papaya, lychee, plum, prune, fig, cucumber, kale, spinach, broccoli, carrot, celery, beets, lettuce, spinach, cabbage, artichoke, coconut, broccoli, Brussels sprouts, cauliflower, watercress, peas, beans, lentils, asparagus, radish, wheat grass and a combination thereof.

### BRIEF DESCRIPTION OF THE DRAWINGS

Figure 1 is a flowchart depicting one aspect of the present disclosure, including steps taken in preparing of enzyme-treated pomace.
Figure 2 is a graph depicting the effect of water activity of orange pomace based on added solutes.

### DETAILED DESCRIPTION

Some aspects of the present disclosure are directed to a beverage product containing at least 1 wt% fiber in order to provide a high fiber beverage but with a low viscosity. A significant amount of pomace may be included in the beverage products: with a beverage product according to the disclosure herein comprising 25-40 wt% enzymatically-treated pomace "High fiber" or "high fiber content" as used in the present disclosure shall mean a fiber content of at least 1 wt%.

In other embodiments, the present disclosure describes a beverage product having at least 1 wt% fiber to provide a high fiber beverage with a high viscosity. In these embodiments, the viscosity is also attributable to the presence of viscous ingredients, viscosity-building ingredients, and/or the amount of enzymatically-treated pomace included therein. Enzymatically-treated pomace in the range of 25-40 wt% may be added to viscous ingredients in the range of 1-40 wt%, and more particularly between 20-40 wt% to create a beverage with a viscosity that is between 2000-4000 cP at 20°C.

It was discovered that fruit or vegetable pomace subjected to certain conditions and certain combinations of enzymes, exhibits no fiber loss, yet beverages containing the enzymatically-treated pomace may have a substantially lower viscosity than beverages containing non-enzymatically-treated pomace. As used herein, non-enzymatically-treated pomace may also be referred to as "untreated pomace." These results were unexpected because although enzymatic hydrolysis is commonly used in the industry to reduce viscosity, such hydrolysis usually destroys the structure of the fiber and negatively impacts sensory attributes, including, for instance, cooked notes, of the product to which it is incorporated, and thus its nutritional value. Without being bound by theory, the inventors believe that under certain reaction conditions, a partial hydrolysis of the native fiber contained in the pomace occurs, whereby the chain length of the native fiberincluding pectin, hemicellulose and cellulose-is reduced, without reaching the point of complete hydrolysis (i.e., breaking down the fiber chain into sugar components). Chain length reduction occurs by endo-scission due to the presence of endo-acting enzymes. Moreover, chain length is reduced to an extent that fiber maintains its standard of identity as determined by the analytical fiber assays. The enzymatic treatment discussed herein was found to control molecular weight reduction. Although the molecular weight of the fiber changes following enzymatic treatment, both the pre and post treatment fiber can be classified as fiber. According to certain aspects of the disclosure, the beverage comprises pomace.

As used herein, the term "pomace" refers to the by-product remaining after fruit or vegetable juice pressing processes, wine crush operations, puree and concentrate operations, canning processes, and other food manufacturing processes. The pomace is typically discarded in the waste stream during processing. Pomace may include, for example, skins, peel, pulp, seeds, cellulosic material, and edible part of stems of the fruit and vegetable such as apples or carrots. Pomace generally contains more than a single item, for example, pomace may contain at least skin and pulp. In some cases the pomace can derive from or contain other parts of the fruit and vegetable such as pod, stalk, flower, root, leaves and tuber. Pomace resulting from juice extraction is typically in the form of a part of a press cake. Depending on the specific fruit or vegetable, pomace may contain portions of the fruit or vegetable which are inedible. Pomace differs from pulp. Pulp is the soft mass of fruit or vegetable matter from which most of the water has been extracted via pressure. For example, orange pomace includes membrane, but orange pulp does not. Further, apple pomace can contain skin, but apple pulp does not.

By-products from paste and puree processes such as tomato skins and seeds from tomato ketchup and paste processing are also included in the pomace even though they are not the by-products from juice extracts. Fruit skins from cannery processes are also edible by-products. Hereafter, pomace includes all by-products from fruit and vegetable juice, paste, puree and canning processes.

Wet pomace, which generally has a moisture content in the range between 70-85 wt%, generally contains high dietary fiber content, and varying amounts of essential vitamins, minerals and phytonutrients (depending on the types of fruit/vegetable and process applied). For example, cranberry pomace remains after the squeezing the juice for cranberry juices and concentrates. The pomace used in accordance with the disclosure herein may be derived from the same fruits and/or vegetables as the juice. In alternative embodiments, the pomace may be derived from fruits and/or vegetables that are different from the fruits and/or vegetables from which the juice is derived. In other embodiments the pomace is derived from fruits, vegetables or a combination of fruits and vegetables.

The pomace contains natural nutrients (such as Vitamin A, vitamin C, vitamin E, phytonutrients such as polyphenols and antioxidants), flavors, colors of the original fruits and vegetables and large amount of a natural (e.g., un-processed fibers. Most juice extraction by-product contains over 40% by weight (dry basis) of dietary fiber. The use of pomace in food products will fortify fiber and naturally existing nutrients such as vitamins and phytochemicals. The use of pomace will also enable the addition of fruit and vegetable fiber to foods which will fortify the food products with fiber and with naturally existing nutrients such as vitamins and phytochemicals.

In accordance with aspects of the disclosure herein, the pomace is enzymatically-treated. As used herein "enzymatically-treated" means adding an enzyme to the pomace to reduce the chain length of the fibrous material. The enzyme may be any enzyme that reduces the chain length of the targeted fiber to lower its molecular weight without releasing sugars. In this manner, the total fiber content of the starting pomace material prior to enzymatic treatment is maintained. In certain implementations, the enzyme used to treat the pomace may include pectinase, hemicellulase, cellulase, or any combination of the aforementioned enzymes. In one embodiment, the enzyme may be added to wet pomace in an amount of between 0.30 to 1 wt%, or between 0.15 to 1 wt%, but in some embodiments, an amount that is at least between 0.15 to 0.75 wt% of the pomace.

The enzymatic treatment takes place under certain conditions in order to achieve pomace that provides a substantial amount of fiber, yet provides a beverage product with a low viscosity. For instance, the mixture of wet pomace and enzyme may be heated, agitated, and/or mixed during enzymatic treatment. In one embodiment, the enzymes are combined with the pomace and the mixture of enzyme(s) and pomace is preheated to 25-57°C. The mixture is then allowed to react at the heated temperature. The mixture may be agitated or mixed while preheating and/or during the reaction. In general, the enzyme / pomace mixture is allowed to react for about 10 minutes to about one hour. The reaction time and temperature are monitored and controlled to achieve this goal.

In some embodiments, the viscosity of a beverage incorporating the enzymatically-treated pomace is between 700-1800 centipoise measured with spindle #2 of a Brookfield viscometer when the enzymatically-treated pomace is included in an amount between 25-40 wt% of the beverage. In some embodiments, the beverage comprises enzymatically-treated pomace in an amount of 36 wt%, with a viscosity of between 1300-1500 centipoise measured with spindle #2 of a Brookfield viscometer. In some embodiments, these viscosities may correspond to the stated range of enzymatically-treated pomace regardless of whether the beverage is full calorie, reduced calorie, or whether the beverage is 100% juice or a juice drink that is less than 100% juice.

Following enzymatic treatment, the enzyme is deactivated. The enzyme may be deactivated using any method sufficient to deactivate the enzyme, including, without limitation, sterilization, pasteurization or otherwise subjecting the mixture to high temperature, short time (HTST) or ultra-high temperature (UHT) for a short time. For example, the enzyme is deactivated by heating to 75 °C to 107 °C for a period of time between 6 seconds to 600 seconds.

The enzymatically-treated pomace prepared in accordance with the present disclosure has the same fiber content as untreated pomace, but with shorter chain lengths. Thus, the overall fiber content is maintained during processing, as illustrated in Table 1, comparing the nutritional compositions of untreated pomace and enzyme-treated orange pomace.

**Table 1**

| | **no-enzyme treatment** | **enzyme treatment 1** | **enzyme treatment 2** | **enzyme treatment 3** |
|---|---|---|---|---|
| Fat (%) | 0.1 | 0.1 | 0.1 | 0.11 |
| Protein (%) | 1.16 | 1.25 | 1.3 | 1.35 |
| Total Sugars (%) | 9 | 8.7 | 8.9 | 8.9 |
| Aarabinose (%) | 0.4 | 0.5 | 0.5 | 0.4 |
| Xylose (%) | BQL | BQL | BQL | BQL |
| Rhamnose (%) | BQL | BQL | BQL | BQL |
| Galactose (%) | BQL | BQL | BQL | BQL |
| Fructose (%) | 2.6 | 2.7 | 2.8 | 2.9 |
| Glucose (%) | 2.2 | 2.3 | 2.4 | 2.5 |
| Sucrose (%) | 4.2 | 3.7 | 3.7 | 3.5 |
| Maltose (%) | BQL | BQL | BQL | BQL |
| Lactose (%) | BQL | BQL | BQL | BQL |
| Total Dietary Fiber (%) | 3.5 | 2.9 | 3.1 | 3 |
| Viscosity (cp) | 14620 | 3040 | 2120 | 2170 |
| Vitamin C (mg/100g) | 24.07 | 24.38 | 23.64 | 21.38 |

| | | | | |
|---|---|---|---|---|
| BQL: Below Quantification Limit | | | | |

The enzymatically-treated pomace may then be added to a liquid to form a beverage product. Typically this is done at temperatures of between about 4° to 25°C. The beverage may be pasteurized before or after the addition of the enzymatically-treated pomace. The beverage product may undergo batch processing or continuous processing.

The liquid contained in the beverage product may be juice. The juice may be derived from any fruits, vegetables or a combination of fruits and vegetables. For instance, the juice may be derived from orange, pineapple, apple, mango, cranberry, grapefruit, blueberry, acai, strawberry, grape, passion fruit, tomato, cucumber, kale, spinach, broccoli, carrot, lemons limes, tangerine, mandarin orange, tangelo, pomelo, celery, beets, lettuce, spinach, cabbage, artichoke, broccoli, beet, Brussels sprouts, cauliflower, watercress, peas, beans lentils, asparagus, radish, peach, banana,, pear, guava, apricot, watermelon, pomegranate, blackberry, papaya, lychee, plume, prune, fig or any combinations thereof. Moreover, the juice may be 100% juice or a juice drink that is less than 100% juice. The juice may be not-from-concentrate or from concentrate.

The liquid of the beverage product may also include water, such as coconut water or flavored water, nectars, serums, or carbonated water. In other embodiments, the liquid of the beverage product may be a dairy product such as milk or cream. The liquid may also be a combination of the above-mentioned liquids. For example, the liquid may be a mixture of both milk and juice, or juice and water.

Beverage products according to the disclosure herein comprise 25-40 wt% of the enzymatically-treated pomace. In a particular embodiment, the beverage product includes 36 wt% of the enzymatically-treated pomace, and when in the absence of a viscous ingredient or a viscosity-building ingredient, such an amount would form a beverage product having a smoothie-like or spoonable consistency.

Beverage products containing the enzymatically-treated pomace exhibit a reduced viscosity compared to a beverage product that contains non-enzymatically-treated pomace. For instance, the viscosity in the beverage product containing the enzymatically-treated pomace may be at least 50% for example, up to about 90% less than the viscosity of a beverage product containing non-enzymatically-treated pomace. In additional embodiments, the viscosity is reduced anywhere in a range of about 50-90% compared to the same beverage product containing non-enzymatically-treated pomace. The viscosity of the beverage product incorporating enzymatically-treated pomace may vary based upon the amount of the enzymatically-treated pomace that is added.

Various additional components may be added to the beverage product in aspects of this disclosure. These components may include, without limitation, flavors, flavorings, sweeteners, food-grade acidulants, such as citric acid, vitamins and minerals, grains, and proteins. Non-limiting examples of grains may include rice, wheat, and oats. Sweeteners may be nutritive and/or non-nutritive. In alternative aspects of the disclosure, carbon dioxide can be used to provide effervescence to the beverages. Any of the techniques and carbonating equipment known in the art for carbonating beverages can be employed. Typical embodiments may have, for instance, from about 0.5 to 5.0 volumes of carbon dioxide.

As previously mentioned, other components may take the form of viscous ingredients such as fruit and/or vegetable purees, and viscosity-building ingredients, such as cereal flour, carrageenan, pectin, gellan gum, etc. These ingredients may be included in a beverage to create a beverage product having a thicker, smoothie-like or spoonable consistency. The utilization of enzymatically-treated pomace in these thicker, more viscous beverage products enables the creation of a beverage that has a higher amount of fiber, but without further increasing the viscosity to levels that may be unexpected or undesirable for consumers. As used herein, these high viscosity beverage products may also referred to herein as "spoonable".

The beverage product may be full calorie, reduced calorie, or low calorie. As used herein, "reduced calorie beverage" means a beverage having at least a 25% reduction in calories per 8 oz. serving of beverage as compared to the full calorie version, typically a previously commercialized full-calorie version. As used herein, a "lowcalorie beverage" has fewer than 40 calories per 8 oz. serving of beverage. The correlative meaning applies to beverage concentrates and other beverage products disclosed here. In certain exemplary embodiments, the reduced calorie beverage may be low calorie beverage. The reduced calorie beverage may be sweetened entirely with one or more non-nutritive sweeteners or with a combination of nutritive and non-nutritive sweeteners.

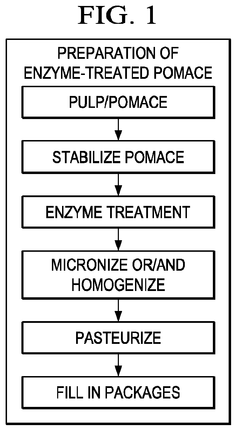

Figure 1 is a method for creating enzymatically-treated pomace in accordance with an illustrative embodiment. As illustrated in Figure 1, in an aspect of the present disclosure, the pulp/pomace is obtained, then stabilized by treating with heat (preheating). The preheated pomace is subsequently subjected to enzyme treatment. In one embodiment, the enzyme treatment step involves combining the enzymes with the pomace to form an enzyme-pomace mixture, which is then heated to at least about 25 °C, for example, to about 25-60°C. The mixture may be agitated or mixed during the reaction, which may last between 10-60 minutes. After the enzyme treatment step, the enzyme is deactivated, for example, by heating the mixture to 75 °C to 107 °C for 6-600 seconds. The particle size of the enzymatically-treated pomace may be reduced via micronization, homogenization, or a combination of these processes. The enzymatically-treated pomace is then added to a fruit and/or vegetable juice, pasteurized and filled in packages. Pasteurization may take place under standard conditions, such as HTST.

In addition to the benefits, including viscosity reduction and fiber retention, the mouthfeel of the beverage products according to non-limiting embodiments described herein is acceptable to consumers. In particular, juices containing untreated pomace tend to have a higher viscosity and a thicker mouthfeel, i.e., more like a smoothie than a pulpfree juice. Testing was performed to identify what range of orange juice viscosities is most acceptable to consumers. Based on this testing, the inventors found that consumers preferred the thinnest product, i.e.., the product with the lowest viscosity. Moreover, with respect to juices and acceptability, consumers prefer a juice that is not much thicker than a regular orange juice. The inventors also found that as long as the product was not too thick, consumer who prefers "no-pulp" products are willing to accept some viscosity for a more nutritious product.

Table 2 illustrates responses relating to consumer liking and mouthfeel for 100% orange juice containing various viscosity and pulp density measurements (beverages that did not contain floating pulp have a density of 0. The letters a, b, c, d, e, and f are used herein to denote significant differences at p=0.10). In accordance with conventional use, if two numbers share the same letter, they are not significantly different from each other. If they do not share a common letter, then they are significantly different from each other. For example, if a number is labelled "a", then it is significantly different than numbers labelled with b, c, d, e, or f as well as numbers labeled with bcd or edf or bc, but it is not significantly different from other numbers labelled with an "a" such as abc or adf or abd or abdf.

**Table 2**

| 100% OJ Viscosity Density | All Participants (n=206) | | | | | | | | | | |
|---|---|---|---|---|---|---|---|---|---|---|---|
| | 100% OJ (Viscosity 20 Density 0) | 100% OJ (Viscosity 85 Density 0) | 100% OJ (Viscosity 100 Density 0) | 100% OJ (Viscosity 150 Density 0) | 100% OJ (Viscosity 20 Density 15) | 100% OJ (Viscosity 85 Density 15) | 100% OJ (Viscosity 150 Density 15) | 100% OJ (Viscosity 20 Density 30) | 100% OJ (Viscosity 85 Density 30 | 100% OJ (Viscosity 100 Density 30) | 100% OJ (Viscosity 150 Density 30) |
| Overall Appearance Liking | 306.9 a | 301.3 ab | 288.5 ab | 287.3 Ab | 293.6 Ab | 284.6 b | 291.1 ab | 283.1 b | 286.1 b | 283.1 b | 285.2 b |
| | | | | | | | | | | | |
| Color Liking | 314.7 | 309.5 | 307.4 | 302.6 | 312.5 | 301.1 | 308.6 | 306.4 | 304.6 | 301.2 | 304.3 |
| | | | | | | | | | | | |
| Mouthfeel Liking | 292.3 a | 266.8 abcd | 238.7 def | 217.0 F | 268.0 Abc | 254.6 bcde | 239.1 def | 274.9 ab | 254.5 bcde | 244.5 cdef | 233.8 ef |
| | | | | | | | | | | | |
| Thickness Liking | 271.6 a | 256.6 abc | 231.2 cde | 202.3 F | 265.6 Ab | 243.5 abcde | 226.9 def | 261.6 ab | 250.5 abcd | 237.7 bcde | 221.5 ef |
| | | | | | | | | | | | |
| Bits of Orange Liking (Removed Non-Detectors) | 221.7 ab (n=85) | 221.7 ab (n=101) | 198.8 b (n=107) | 199.6 b (n=110) | 243.2 a (n=180) | 232.0 ab (n=186) | 224.5 ab (n=183) | 246.1 a (n=194) | 239.8 a (n=185) | 237.8 a (n=195) | 230.5 ab (n=195) |
| | | | | | | | | | | | |
| Bits of Orange Amount (Removed Non-Detectors) | 137.6 d (n=87) | 140.4 d (n=101) | 133.6 d (n=106) | 137.0 d (n=100) | 184.4 c (n=183) | 201.6 bc (n=184) | 184.6 c (n=185) | 213.3 (n=194) | 218.3 ab (n=189) | 211.6 (n=193) | 226.7 (n=191) |
| Aftertaste Liking | 262.9 a | 251.3 ab | 226.3 bc | 215.1 C | 255.3 A | 246.3 ab | 238.3 abc | 265.8 a | 255.7 a | 244.9 ab | 240.0 abc |

In addition to providing desirable mouthfeel, the inclusion of enzyme-treated pomace has been shown to provide beverage products with an improved taste profile, particularly in the presence of beverage ingredients that may cause the taste to differ from a beverage product that utilizes all natural ingredients, or only 100% juice ingredients. For example, low calorie beverages sweetened in whole or in part by a non-nutritive sweetener typically have a distinctive taste. The inclusion of enzyme-treated pomace to a low calorie beverage in the amount between 1-40 wt% has been shown to mask the taste attributable to the non-nutritive sweetener. As a result, the low calorie beverage has a more natural taste.

### Example 1

Orange pomace is enzymatically-treated by adding about 0.15 to 1 wt% of an enzyme mixture containing pectinase alone or in combination with hemicellulase and/or cellulase based on wt% of fiber in orange pomace and heating to at least about 25°C. The enzymatically-treated pomace can be micronized /homogenized for consistency of ingredients and deactivated.

The enzymatically-treated pomace is added to a food-safe liquid, for example, 100% not-from concentration (NFC) orange juice in the amounts identified in Table 3 below. The mixture is agitated for 10 minutes. The resulting fiber content (wt% based on total weight of the pomace) and viscosity values of the resulting beverage product are included in Table 3. From the data included in Table 3, a beverage can be formulated with enzymatically-treated pomace in an amount between 1-40 wt% of the beverage, with a corresponding viscosity between 1-1800 centipoise, and more specifically between 5-1780 centipoise. At higher viscosities, the beverage has a smoothie-like consistency. For example, with enzymatically-treated pomace in an amount of around 36 wt%, the beverage has a viscosity between 1300-1500 centipoise, and more specifically about 1400 centipoise.

**Table 3**

| **Ingredient** | NFC OJ with enzyme treated pomace | | | | | | | |
|---|---|---|---|---|---|---|---|---|
| NFC OJ (%) | 95.7 | 88.3 | 85 | 85 | 75 | 70 | 64 | 60 |
| Orange Pomace (%) | 4.3# | 11.7# | 15# | 21.7# | 25 | 30 | 36 | 40 |
| Fiber (%) | 0.5 | 0.85 | 1 | 1.32 | 1.475 | 1.7 | 2 | 2.18 |
| Viscosity (cP) | 32 | 80 | 100 | 278 | 714* | 956* | 1400* | 1776* |

| | | | | | | | | |
|---|---|---|---|---|---|---|---|---|
| Viscosity values identified with a single asterisk (*) were measured with spindle #2 of a Brookfield viscometer. The remaining values were measured with spindle #1. All samples were measured at 20 RPM and 20 degrees C. # not in accordance with the invention. | | | | | | | | |

In contrast, NFC orange juice combined with the same pomace that was not enzymatically-treated contained the same amount of fiber as the beverage product containing enzymatically-treated pomace; however, the viscosity of the beverage product containing the enzymatically-treated pomace was significantly lower than the beverage product containing non-enzymatically-treated pomace. Results of the non-enzymatically-treated orange juice are provided in Table 4 for comparison.

**Table 4**

| **Ingredient** | NFC OJ with untreated pomace | | | | | | | |
|---|---|---|---|---|---|---|---|---|
| NFC OJ (%) | 95.7 | 88.3 | 85 | 85 | 75 | 70 | 64 | 60 |
| Orange Pomace (%) | 4.3 | 11.7 | 15 | 21.7 | 25 | 30 | 36 | 40 |
| Fiber (%) | 0.5 | 0.85 | 1 | 1.32 | 1.475 | 1.7 | 2 | 2.18 |
| Viscosity (cP) | 55 | 265 | 463 | 1300* | 1340* | 2140** | 3880** | 5400** |

| | | | | | | | | |
|---|---|---|---|---|---|---|---|---|
| Viscosity values identified with a single asterisk (*) were measured with spindle #2 of Brookfield. Those marked with a double asterisk (**) were measured with spindle #5. All remaining values were measured with spindle #1. | | | | | | | | |

### Example 2

Orange pomace is enzymatically-treated by adding about 0.15 to 1 wt% of an enzyme mixture containing pectinase alone or in combination with hemicellulase and/or cellulase based on wt% of fiber in orange pomace and heating to at least about 25°C. The enzymatically-treated pomace can be micronized/homogenized for consistency of ingredients and deactivated.

The enzymatically-treated pomace is combined with puree and juice to form a spoonable beverage product having a viscosity that is greater than 3000 cP, as measured by a Brookfield rotary viscometer at 20°C. More specifically, between 30-40 wt% of the pomace is added to an equal amount of fruit and/or vegetable puree, the remainder of the beverage product formed from a fruit and/or vegetable juice to create a beverage product having a viscosity that is greater than 3000 cP, and more particularly between 3000 - 4000 cP. Even more specifically, 35.98 wt% orange pomace is added with an equal amount of mango puree, and 29.98 wt% apple juice, as shown in Table 5 below, to create a beverage product having a viscosity of 3425 cP.

**Table 5.**

| **SPOONABLE FORMULATION #1** | |
|---|---|
| **Ingredients** | **Weight %** |
| Orange Pomace | 35.98 |
| Mango Puree | 35.98 |
| Apple Juice | 29.98 |
| Mango Citrus Flavor | 0.05 |
| Total (%) | 100.00 |
| Viscosity | 3425 cP |

### Example 3

Orange pomace is enzymatically-treated by adding about 0.15 to 1 wt% of an enzyme mixture containing pectinase alone or in combination with hemicellulase and/or cellulase based on wt% of fiber in orange pomace and heating to at least about 25°C. The enzymatically-treated pomace can be micronized/homogenized for consistency of ingredients and deactivated.

In the following example, which is not in accordance with the invention, the pomace is combined with puree and juice, and a viscosity-building ingredient to create a spoonable beverage product having a viscosity that is greater than 2000 cP, as measured by a Brookfield rotary viscometer at 20°C. More specifically, between 10-20 wt% of pomace may be added to a fruit and/or vegetable puree in an amount between 30-40 wt%, including an amount of a viscosity-building ingredient that ranges between 1-5 wt%. Juice is also added in an amount between 40-54 wt%, yielding a beverage having a viscosity that is between 2000-3000 cP. In a more specific example, as shown in Table 6, about 15 wt% orange pomace is added to about 22 wt% carrot puree and about 12 wt% apple puree. The beverage product also includes about 12 wt% apple juice and about 35 wt% orange juice, and about 3.2 wt% oat flour. About 0.05 wt% of citric acid is also added. The beverage product has a viscosity that is about 2510 cP, as measured by a Brookfield rotary viscometer at 20°C.

**Table 6.**

| **SPOONABLE FORMULATION #2** | |
|---|---|
| **Ingredients** | **Weight %** |
| Orange Pomace | 14.99 |
| Carrot Puree | 21.99 |
| Apple Puree | 12.39 |
| Apple Juice | 12.39 |
| Oat Flour | 3.2 |
| Orange Juice | 34.98 |
| Citric Acid | 0.05 |
| Total (%) | 100.00 |
| Viscosity | 2510 cP |

Carrageenan is a commonly used viscosity-building ingredient or gelling agent that is extracted from red edible seaweeds. Carrageenan may be added to a beverage product to cause gelling, which increases the viscosity of the beverage to which it is added. In the two examples that follow, varying amounts of carrageenan have been added to a beverage product that also includes enzymatically-treated pomace.

### Example 4

Orange pomace is enzymatically-treated by adding about 0.15 to 1 wt% of an enzyme mixture containing pectinase alone or in combination with hemicellulase and/or cellulase based on wt% of fiber in orange pomace and heating to at least about 25°C. The enzymatically-treated pomace can be micronized/homogenized for consistency of ingredients and deactivated. The pomace, a viscous ingredient, and a viscosity-building ingredient are mixed with water and some other flavorants. More specifically, between 30-40 wt% of orange pomace is combined with 10-20 wt% of a viscosity-building ingredient, such as carrageenan, and 1-5 wt% orange concentrate. Between 7-17 wt% water is added, along with flavorants. In a more specific example, as shown in Table 7, about 35 wt% orange pomace is mixed with about 15 wt% carrageenan, 3.2 wt% orange concentrate, and about 12.4 wt% water. The remaining ingredients include sodium citrate, sugar, and flavor.

**Table 7.**

| **SPOONABLE FORMULATION #3** | |
|---|---|
| **Ingredients** | **Weight %** |
| Carrageenan | 14.99 |
| Sodium Citrate | 21.99 |
| Sugar | 12.39 |
| Water | 12.39 |
| Orange Concentrate | 3.2 |
| Orange Pomace | 34.98 |
| Flavor | 0.05 |
| Total (%) | 100.00 |

### Example 5

Orange pomace is enzymatically-treated by adding about 0.15 to 1 wt% of an enzyme mixture containing pectinase alone or in combination with hemicellulase and/or cellulase based on wt% of fiber in orange pomace and heating to at least about 25°C. The enzymatically-treated pomace can be micronized /homogenized for consistency of ingredients and deactivated.

The enzymatically-treated pomace is combined with viscous ingredients, viscosity-building ingredients, flavorants, and water to form spoonable beverage product. More specifically, in the following example, which is not in accordance with the invention, between 10-20 wt% of the pomace mixed with 20-30 wt% viscous ingredients, which may include yogurt, blueberry puree, and black currant concentrate. Also mixed with the pomace are viscosity-building ingredients, such as carrageenan and oat flour, in an amount between 1-5 wt%. About 40-60 wt% liquids, such as water and juice, along with 2-10 wt% flavorants and citric acid. A more specific example of the formulation is provided in Table 8 below.

**Table 8.**

| **SPOONABLE FORMULATION #4** | |
|---|---|
| **Ingredients** | **Weight %** |
| Carrageenan | 0.35 |
| Sodium Citrate | 0.2 |
| Sugar | 5 |
| Water | 43.035 |
| Oat Flour | 3.2 |
| FC Orange Juice | 6.9 |
| Orange Pomace | 15 |
| Citric Acid | 0.1 |
| Yogurt | 22.4 |
| Blueberry Puree | 3.165 |
| Black Currant Concentrate | 0.5 |
| Mixed Berry Flavor | 0.15 |
| Total (%) | 100.00 |

### Example 6

Orange pomace is enzymatically-treated by adding about 0.15 to 1 wt% of an enzyme mixture containing pectinase alone or in combination with hemicellulase and/or cellulase based on wt% of fiber in orange pomace and heating to at least about 25°C. The enzymatically-treated pomace can be micronized/homogenized for consistency of ingredients and deactivated.

The orange pomace is mixed with a liquid formed from a mixture of milk and juice, a viscosity-building ingredient, edible acids, and flavorants to create a beverage product with a viscosity greater than 300 cP. More specifically, in the following example, which is not in accordance with the invention, between 10-20 wt% orange pomace is added to 75-85 wt% of a liquid mixture formed from milk and juice to form a beverage product with a viscosity between 300-400 cP. Between 1-5 wt% oat flour is added, along with between 0.1-0.04 wt% edible acid, and between 0.1-0.5 wt% flavorant. A more specific example is provided in Table 8 below, which has a viscosity of about 350 cP.

**Table 8.**

| **JUICE AND DAIRY FORMULATION** | |
|---|---|
| **Ingredients** | **Weight %** |
| Skim Milk | 21 |
| Orange Juice | 60 |
| Orange Pomace | 15 |
| Oat Flour | 3.4 |
| Malic Acid | 0.16 |
| Citric Acid | 0.13 |
| Orange Flavor | 0.31 |
| Total | 100 |
| Viscosity | 350 cP |

By maintaining the amount of fiber throughout processing, fiber-related health claims may be made with respect to the beverage products containing the enzymatically-treated pomace. Moreover, because the fiber content in the pomace remains unaltered by the enzymatic treatment, the beverage products provided herein provide the same nutritional benefits as beverage products containing non-enzymatically-treated pomace.

Enzymatically-treated pomace may be combined with fruit juices or fruit juice concentrates for water activity reduction. This combination of pomace and fruit juice enables the addition of concentrated fruit or vegetable products to foods. This addition of whole fruit and vegetable products to shelf stable foods increases the nutritional value of the food as previously described for beverage products.

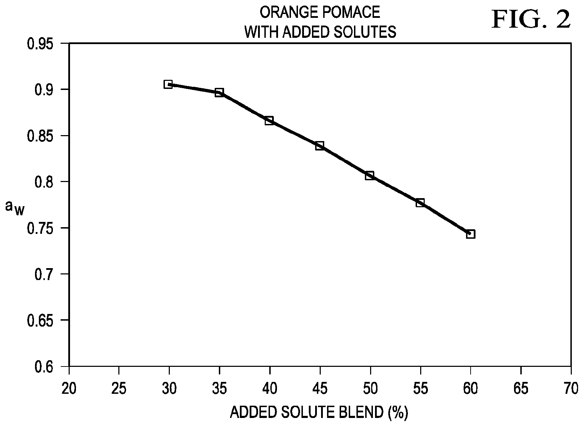

Food products may also be produced with enzyme treated high fiber fruit and vegetable materials, such as pomace. In food products, enzymatically-treated pomace, can be combined with soluble solids such as sugars, sugar alcohols and salts to reduce the water activity of the pomace. For example, the starting water activity of the orange pomace is 0.987. The ending water activity can be adjusted to a desired water activity which depends on the amount of solutes added. For microstability, with the use of potassium sorbate, it is desired to reduce the water activity to below 0.83. See Table 9 below and Figure 2.

**Table 9**

| Effect on Water Activity of a Model Solute Blend | | | | | | | | |
|---|---|---|---|---|---|---|---|---|
| | % | % | % | % | % | % | % | % |
| Orange Pomace | 0.00 | 70.0 | 65.00 | 60.00 | 55.00 | 50.00 | 45.00 | 40.00 |
| Solute Blend | | | | | | | | |
| Glycerine, 99% USP | 56.67 | 16.71 | 19.48 | 22.27 | 25.04 | 27.83 | 30.63 | 33.40 |
| Fructose, crystalline | 19.08 | 5.72 | 6.68 | 7.63 | 8.59 | 9.54 | 10.49 | 11.45 |
| Honey | 19.08 | 5.72 | 6.68 | 7.63 | 8.59 | 9.54 | 10.49 | 11.45 |
| Milk permeate powder | 6.17 | 1.85 | 2.16 | 2.47 | 2.78 | 3.09 | 3.39 | 3.70 |
| | | | | | | | | |
| Solute Blend Total (%) | 100.00 | 30.00 | 35.00 | 40.00 | 45.00 | 50.00 | 55.00 | 60.00 |
| Total % | 100.00 | 100.00 | 100.00 | 100.00 | 100.00 | 100.00 | 100.00 | 100.00 |
| Water Activity | | 0.904 | 0.896 | 0.866 | 0.838 | 0.805 | 0.776 | 0.743 |

This reduced water activity pomace may be incorporating as a filling, topping, binder or inclusion in shelf-stable food products. In addition, water activity reduced pomace may be formulated as a dip, spread, or topping that can be used for dipping, spreading or topping on fruits, vegetables, breads, crackers or chips. For food products, the viscosity reduction of pomace facilitates processing.

For example, pomace may be dehydrated using either heat to remove moisture or heat and vacuum to remove moisture under lower temperature conditions. This dehydration of pomace is facilitated by the viscosity reduction of the enzymatically-treated pomace. Generally, in dehydration processes, the maximum dehydration is limited by the increase in viscosity corresponding to the increase in solids content. Enzyme treated pomace allows for a greater concentration of the pomace (greater solids concentration and corresponding lower moisture content) to be incorporated into a food product. Further, with the lower moisture content of the pomace of the present disclosure, greater water activity reduction can be achieved. This water activity reduction is important for imparting microbiological shelf stability of the food products. In addition, as the pomace is concentrated, less soluble solids are required for lowering the water activity, which allows an equivalent water activity reduction with the addition of less sugars, sugar alcohols and salts.

### Example 7- Not in accordance with the Invention

An orange pomace filling is made by combining orange pomace with filling ingredients. The water activity of this orange pomace filling is 0.77.

| Orange Pomace Filling | |
|---|---|
| | |

| Ingredients | Formula (%) |
|---|---|
| Orange Pomace | 33.30 |
| Potassium Sorbate | 0.09 |
| Glycerine, 99%, USP | 9.04 |
| Dextrose (Glucose) | 14.28 |
| Fructose, crystalline | 14.15 |
| Invert Sugar Syrup | 12.39 |
| Sugar (sucrose), bulk fine | 10.53 |
| Starch, Mira-thik 468 | 0.94 |
| Starch, Mira-gel 463 | 0.94 |
| Starch, Lo-temp 588 | 1.51 |
| Microcrystalline Cellulose | 2.83 |
| Total (%) | 100.00 |

The orange pomace filling is then combined with cereal based dough (50/50 ratio by weight) and then baked at 163°C (325°F) for 8 minutes.

| Cereal Based Dough | |
|---|---|
| | |

| Ingredients | Formula (%) |
|---|---|
| Wheat flour, soft, unbleached | 35.27 |
| Dextrose (Glucose) | 1.91 |
| Molasses | 0.96 |
| Vanilla flavor | 0.12 |
| Salt | 0.51 |
| Baking Powder | 0.51 |
| Water | 14.00 |
| Sunflower Oil, high oleic | 13.73 |
| Invert Sugar syrup | 1.98 |
| Potassium sorbate | 0.25 |
| Oat flakes, old fashioned | 15.38 |
| Oat flakes, baby size | 15.38 |
| Total (%) | 100.00 |

The product is cut into orange pomace topped bars containing about 16% pomace and having water activity a_{w} of 0.75.

## Claims

1. A beverage product comprising:
liquid; and
25-40 wt% enzymatically-treated pomace, wherein the enzymatically-treated pomace is derived from pomace selected from a group consisting of at least one fruit, at least one vegetable, or a combination thereof;
wherein the beverage product has a viscosity measured with spindle #2 of a Brookfield viscometer at 20 r.p.m. of between 700-1800 cP at 20 °C; and
wherein the beverage product comprises at least 1 wt% fiber.

2. The beverage product of claim 1, wherein the beverage product comprises 36 wt% enzymatically-treated pomace, and wherein the beverage product has a viscosity measured with spindle #2 of a Brookfield viscometer at 20 r.p.m of between 1300-1500 cP at 20 °C.

3. A beverage product comprising:
liquid;
25-40 wt% enzymatically-treated pomace, wherein the enzymatically-treated pomace is derived from pomace selected from a group consisting of at least one fruit, at least one vegetable, or a combination thereof; and
1-40 wt% of a viscous ingredient and/or 1-20 wt% of a viscosity-building ingredient;
wherein the beverage product has a viscosity measured with spindle #5 of a Brookfield viscometer at 20 r.p.m of between 2000-4000 cP at 20 °C; and
wherein the beverage product comprises at least 1 wt% fiber.

4. The beverage product of any one of claims 1 to 3, wherein the liquid comprises a juice, preferably wherein the juice is selected from a group comprising orange, pineapple, apple, mango, cranberry, grapefruit, blueberry, acai, strawberry, grape, passion fruit, tomato, cucumber, kale, spinach, broccoli, carrot, lemons, limes, tangerine, mandarin orange, tangelo, pomelo, celery, beets, lettuce, spinach, cabbage, artichoke, broccoli, Brussels sprouts, cauliflower, watercress, peas, beans, lentils, asparagus, radish, peach, banana, pear, guava, apricot, watermelon, pomegranate, blackberry, papaya, lychee, plum, prune, fig and a combination thereof, optionally wherein the beverage product further comprises at least one grain, and further optionally wherein the liquid further comprises dairy.

5. The beverage product of any one of claims 1 to 4, wherein the enzymatically-treated pomace is obtained by treating the pomace with enzymes selected from the group consisting of pectinase, cellulase, hemicellulase or a combination thereof.

6. The beverage product of any one of claims 1 to 5, wherein the beverage product is a reduced calorie beverage comprising a non-nutritive sweetener, and wherein a taste profile of the reduced calorie beverage product is similar to a full-calorie beverage lacking the non-nutritive sweetener.

7. The beverage product of any one of claims 1 to 6, wherein the pomace is derived from at least one fruit or vegetable selected from the group comprising orange, pineapple, apple, mango, cranberry, grapefruit, blueberry, acai, strawberry, grape, passion fruit, tomato, lemons, limes, tangerine, mandarin orange, tangelo, pomelo, peach, banana, pear, guava, apricot, watermelon, pomegranate, blackberry, papaya, lychee, plum, prune, fig, cucumber, kale, spinach, broccoli, carrot, celery, beets, lettuce, spinach, cabbage, artichoke, coconut, broccoli, Brussels sprouts, cauliflower, watercress, peas, beans, lentils, asparagus, radish, wheat grass and a combination thereof.

8. A method comprising:
subjecting pomace, selected from a group consisting of at least one fruit, at least one vegetable, or a combination thereof, to at least one enzyme to form a pomace-enzyme mixture, wherein the pomace comprises fiber and the pomace-enzyme mixture comprises the at least one enzyme in an amount between 0.15-1.0 wt% of the pomace;
heating the pomace-enzyme mixture to 25-57°C for 10-60 minutes; and
deactivating the at least one enzyme to form the enzymatically-treated pomace;
wherein the enzymatically-treated pomace comprises an amount of fiber that is the same before and after enzymatic treatment and wherein the fiber in the enzymatically-treated pomace has a shorter chain length than native fiber in the pomace before enzymatic treatment;
the method further comprising adding the enzymatically-treated pomace to liquid to form a beverage product comprising at least 1 wt% fiber, wherein the enzymatically-treated pomace is added in an amount between 25-40 wt% of the beverage product, and wherein the viscosity of the beverage product, measured with spindle #2 of a Brookfield viscometer at 20 r.p.m is 700-1800 cP measured at 20°C, optionally wherein the amount of enzymatically-treated pomace is 36 wt% of the beverage product, and wherein the viscosity, measured with spindle #2 of a Brookfield viscometer at 20 r.p.m, of the beverage product is between 1300-1500 cP at 20°C.

9. A method comprising:
subjecting pomace, selected from a group consisting of at least one fruit, at least one vegetable, or a combination thereof, to at least one enzyme to form a pomace-enzyme mixture, wherein the pomace comprises fiber and the pomace-enzyme mixture comprises the at least one enzyme in an amount between 0.15-1.0 wt% of the pomace;
heating the pomace-enzyme mixture to 25-57 °C for 10-60 minutes; and
deactivating the at least one enzyme to form the enzymatically-treated pomace;
wherein the enzymatically-treated pomace comprises an amount of fiber that is the same before and after enzymatic treatment and wherein the fiber in the enzymatically-treated pomace has a shorter chain length than native fiber in the pomace before enzymatic treatment;
the method further comprising adding a) a viscous ingredient and/or a viscosity-building ingredient and b) the enzymatically-treated pomace to a liquid to form a beverage product comprising at least 1 wt% fiber, wherein the enzymatically-treated pomace is added in an amount between 25-40 wt% of the beverage product, wherein any viscous ingredient is added in an amount between 1-40 wt% of the beverage product and any viscosity-building ingredient is added in an amount of 1-20 wt% of the beverage product, and wherein the viscosity of the beverage product, measured with spindle #5 of a Brookfield viscometer at 20 r.p.m is 2000-4000 cP measured at 20°C.

10. The method of claim 8 or 9, wherein the range of the at least one enzyme is between 0.15-0.75 wt% of the pomace, optionally the method further comprising: agitating the pomace-enzyme mixture during the heating step.

11. The method of any one of claims 8 to 10, wherein the pomace contains a fiber content of between 3-8 wt%.

12. The method of any one of claims 8 to 11, wherein the enzyme is pectinase, hemicellulase, cellulase, or any combination thereof.

13. The method of any one of claims 8 to 12, further comprising: deactivating the enzyme by heating the pomace-enzyme mixture to 75-107 °C for 6-600 seconds.

14. The method of any one of claims claim 8 to 13, further comprising: reducing a particle size of the enzymatically-treated pomace, optionally wherein the particle size of the enzyme-treated pomace is reduced by processes selected from the group consisting of micronization, homogenization, or a combination thereof.

15. The method of any one of claims 8 to 14, wherein:
(a) the liquid comprises a juice, preferably wherein the juice is selected from a group comprising orange, pineapple, apple, mango, cranberry, grapefruit, blueberry, acai, strawberry, grape, passion fruit, tomato, cucumber, kale, spinach, broccoli, carrot, lemons, limes, tangerine, mandarin orange, tangelo, pomelo, celery, beets, lettuce, spinach, cabbage, artichoke, broccoli, Brussels sprouts, cauliflower, watercress, peas, beans, lentils, asparagus, radish, peach, banana, pear, guava, apricot, watermelon, pomegranate, blackberry, papaya, lychee, plum, prune, fig and a combination thereof, optionally wherein the beverage product further comprises at least one grain, and further optionally wherein the liquid further comprises dairy; and/or
(b) the pomace is derived from at least one fruit or vegetable selected from the group comprising orange, pineapple, apple, mango, cranberry, grapefruit, blueberry, acai, strawberry, grape, passion fruit, tomato, lemons, limes, tangerine, mandarin orange, tangelo, pomelo, peach, banana, pear, guava, apricot, watermelon, pomegranate, blackberry, papaya, lychee, plum, prune, fig, cucumber, kale, spinach, broccoli, carrot, celery, beets, lettuce, spinach, cabbage, artichoke, coconut, broccoli, Brussels sprouts, cauliflower, watercress, peas, beans, lentils, asparagus, radish, wheat grass and a combination thereof.

## Patentansprüche

1. Getränkeprodukt, umfassend:
Flüssigkeit; und
25-40 Gew.-% enzymatisch behandelte Trester, wobei die enzymatisch behandelten Trester von Trestern abgeleitet sind, die aus einer Gruppe bestehend aus mindestens einer Frucht, mindestens einem Gemüse oder einer Kombination davon ausgewählt sind;
wobei das Getränkeprodukt eine Viskosität zwischen 700 und 1800 cP bei 20°C, gemessen mit Spindel Nr. 2 eines Brookfield-Viskosimeters bei 20 U/min, aufweist; und
wobei das Getränkeprodukt mindestens 1 Gew.-% Ballaststoff umfasst.

2. Getränkeprodukt nach Anspruch 1, wobei das Getränkeprodukt 36 Gew.-% enzymatisch behandelte Trester umfasst, und wobei das Getränkeprodukt eine Viskosität zwischen 1300 und 1500 cP bei 20°C, gemessen mit Spindel Nr. 2 eines Brookfield-Viskosimeters bei 20 U/min, aufweist.

3. Getränkeprodukt, umfassend:
Flüssigkeit;
25-40 Gew.-% enzymatisch behandelte Trester, wobei die enzymatisch behandelten Trester von Trestern abgeleitet sind, die aus einer Gruppe bestehend aus mindestens einer Frucht, mindestens einem Gemüse oder einer Kombination davon ausgewählt sind; und
1-40 Gew.-% einer viskosen Zutat und/oder 1-20 Gew.-% einer die Viskosität erhöhenden Zutat;
wobei das Getränkeprodukt eine Viskosität zwischen 2000 und 4000 cP bei 20°C, gemessen mit Spindel Nr. 5 eines Brookfield-Viskosimeters bei 20 U/min, aufweist; und
wobei das Getränkeprodukt mindestens 1 Gew.-% Ballaststoff umfasst.

4. Getränkeprodukt nach einem der Ansprüche 1 bis 3, wobei die Flüssigkeit einen Saft umfasst, vorzugsweise wobei der Saft aus einer Gruppe umfassend Orange, Ananas, Apfel, Mango, Moosbeere, Grapefruit, Heidelbeere, Acaifrucht, Erdbeere, Weintraube, Maracuja, Tomate, Gurke, Grünkohl, Spinat, Brokkoli, Möhre, Zitronen, Limetten, Tangerine, Mandarine, Tangelo, Pampelmuse, Sellerie, Rüben, Kopfsalat, Spinat, Weißkohl, Artischocke, Brokkoli, Rosenkohl, Blumenkohl, Brunnenkresse, Erbsen, Bohnen, Linsen, Spargel, Radieschen, Pfirsich, Banane, Birne, Guave, Aprikose, Wassermelone, Granatapfel, Brombeere, Papaya, Litschi, Pflaume, Backpflaume, Feige und einer Kombination davon ausgewählt ist, optional wobei das Getränkeprodukt ferner mindestens ein Getreide umfasst und ferner optional wobei die Flüssigkeit ferner ein Molkereiprodukt umfasst.

5. Getränkeprodukt nach einem der Ansprüche 1 bis 4, wobei die enzymatisch behandelten Trester durch Behandeln der Trester mit Enzymen erhalten werden, die aus der Gruppe bestehend aus Pektinase, Cellulase, Hemicellulase oder einer Kombination davon ausgewählt sind.

6. Getränkeprodukt nach einem der Ansprüche 1 bis 5, wobei das Getränkeprodukt ein kalorienreduziertes Getränk ist, umfassend ein kalorienfreies Süßungsmittel, und wobei ein Geschmacksprofil des kalorienreduzierten Getränkeprodukts einem Getränk mit voller Kalorienzahl, dem das kalorienfreie Süßungsmittel fehlt, ähnlich ist.

7. Getränkeprodukt nach einem der Ansprüche 1 bis 6, wobei die Trester von mindestens einer Frucht oder einem Gemüse abgeleitet sind, die bzw. das aus der Gruppe umfassend Orange, Ananas, Apfel, Mango, Moosbeere, Grapefruit, Heidelbeere, Acaifrucht, Erdbeere, Weintraube, Maracuja, Tomate, Zitronen, Limetten, Tangerine, Mandarine, Tangelo, Pampelmuse, Pfirsich, Banane, Birne, Guave, Aprikose, Wassermelone, Granatapfel, Brombeere, Papaya, Litschi, Pflaume, Backpflaume, Feige, Gurke, Grünkohl, Spinat, Brokkoli, Möhre, Sellerie, Rüben, Kopfsalat, Spinat, Weißkohl, Artischocke, Kokosnuss, Brokkoli, Rosenkohl, Blumenkohl, Brunnenkresse, Erbsen, Bohnen, Linsen, Spargel, Radieschen, Weizengras und einer Kombination davon ausgewählt ist.

8. Verfahren, umfassend:
Unterziehen von Trester, die aus einer Gruppe bestehend aus mindestens einer Frucht, mindestens einem Gemüse oder einer Kombination davon ausgewählt sind, mindestens einem Enzym, um ein Trester-Enzym-Gemisch zu bilden, wobei die Trester Ballaststoff umfassen und das Trester-Enzym-Gemisch das mindestens eine Enzym in einer Menge zwischen 0,15 und 1,0 Gew.-% der Trester umfasst;
Erhitzen des Trester-Enzym-Gemischs auf 25-57°C für 10-60 Minuten und
Deaktivieren des mindestens einen Enzyms, um die enzymatisch behandelten Trester zu bilden;
wobei die enzymatisch behandelten Trester eine Ballaststoffmenge umfassen, die vor und nach der enzymatischen Behandlung gleich ist, und wobei der Ballaststoff in den enzymatisch behandelten Trestern eine kürzere Kettenlänge als nativer Ballaststoff in den Trestern vor der enzymatischen Behandlung aufweist;
wobei das Verfahren ferner ein Zugeben der enzymatisch behandelten Trester zu Flüssigkeit umfasst, um ein Getränkeprodukt zu bilden, umfassend mindestens 1 Gew.-% Ballaststoff, wobei die enzymatisch behandelten Trester in einer Menge zwischen 25 und 40 Gew.-% des Getränkeprodukts zugegeben werden, und wobei die Viskosität des Getränkeprodukts 700-1800 cP, gemessen bei 20°C, gemessen mit Spindel Nr. 2 eines Brookfield-Viskosimeters bei 20 U/min, beträgt, optional wobei die Menge an enzymatisch behandelten Trestern 36 Gew.-% des Getränkeprodukts ausmacht, und wobei die Viskosität des Getränkeprodukts zwischen 1300 und 1500 cP bei 20°C, gemessen mit Spindel Nr. 2 eines Brookfield-Viskosimeters bei 20 U/min, liegt.

9. Verfahren, umfassend:
Unterziehen von Trester, die aus einer Gruppe bestehend aus mindestens einer Frucht, mindestens einem Gemüse oder einer Kombination davon ausgewählt sind, mindestens einem Enzym, um ein Trester-Enzym-Gemisch zu bilden, wobei die Trester Ballaststoff umfassen und das Trester-Enzym-Gemisch das mindestens eine Enzym in einer Menge zwischen 0,15 und 1,0 Gew.-% der Trester umfasst;
Erhitzen des Trester-Enzym-Gemischs auf 25-57°C für 10-60 Minuten; und
Deaktivieren des mindestens einen Enzyms, um die enzymatisch behandelten Trester zu bilden;
wobei die enzymatisch behandelten Trester eine Ballaststoffmenge umfassen, die vor und nach der enzymatischen Behandlung gleich ist, und wobei der Ballaststoff in den enzymatisch behandelten Trestern eine kürzere Kettenlänge als nativer Ballaststoff in den Trestern vor der enzymatischen Behandlung aufweist;
wobei das Verfahren ferner ein Zugeben a) einer viskosen Zutat und/oder einer die Viskosität erhöhenden Zutat und b) der enzymatisch behandelten Trester zu einer Flüssigkeit umfasst, um ein Getränkeprodukt zu bilden, umfassend mindestens 1 Gew.-% Ballaststoff, wobei die enzymatisch behandelten Trester in einer Menge zwischen 25 und 40 Gew.-% des Getränkeprodukts zugegeben werden, wobei jegliche viskose Zutat in einer Menge zwischen 1 und 40 Gew.-% des Getränkeprodukts zugegeben wird und jegliche die Viskosität erhöhende Zutat in einer Menge von 1-20 Gew.-% des Getränkeprodukts zugegeben wird und wobei die Viskosität des Getränkeprodukts 2000-4000 cP, gemessen bei 20°C, gemessen mit Spindel Nr. 5 eines Brookfield-Viskosimeters bei 20 U/min, beträgt.

10. Verfahren nach Anspruch 8 oder 9, wobei der Bereich des mindestens einen Enzyms zwischen 0,15 und 0,75 Gew.-% der Trester liegt, optional wobei das Verfahren ferner umfasst:
Rühren des Trester-Enzym-Gemischs während des Erhitzungsschritts.

11. Verfahren nach einem der Ansprüche 8 bis 10, wobei die Trester einen Ballaststoffgehalt zwischen 3 und 8 Gew.-% enthalten.

12. Verfahren nach einem der Ansprüche 8 bis 11, wobei das Enzym Pektinase, Hemicellulase, Cellulase oder eine beliebige Kombination davon ist.

13. Verfahren nach einem der Ansprüche 8 bis 12, ferner umfassend: Deaktivieren des Enzyms durch Erhitzen des Trester-Enzym-Gemischs auf 75-107°C für 6-600 Sekunden.

14. Verfahren nach einem der Ansprüche 8 bis 13, ferner umfassend: Verringern einer Teilchengröße der enzymatisch behandelten Trester, optional wobei die Teilchengröße der enzymbehandelten Trester durch Vorgänge verringert wird, die aus der Gruppe bestehend aus Mikronisierung, Homogenisierung oder einer Kombination davon ausgewählt sind.

15. Verfahren nach einem der Ansprüche 8 bis 14, wobei:
(a) die Flüssigkeit einen Saft umfasst, vorzugsweise wobei der Saft aus einer Gruppe umfassend Orange, Ananas, Apfel, Mango, Moosbeere, Grapefruit, Heidelbeere, Acaifrucht, Erdbeere, Weintraube, Maracuja, Tomate, Gurke, Grünkohl, Spinat, Brokkoli, Möhre, Zitronen, Limetten, Tangerine, Mandarine, Tangelo, Pampelmuse, Sellerie, Rüben, Kopfsalat, Spinat, Weißkohl, Artischocke, Brokkoli, Rosenkohl, Blumenkohl, Brunnenkresse, Erbsen, Bohnen, Linsen, Spargel, Radieschen, Pfirsich, Banane, Birne, Guave, Aprikose, Wassermelone, Granatapfel, Brombeere, Papaya, Litschi, Pflaume, Backpflaume, Feige und einer Kombination davon ausgewählt ist, optional wobei das Getränkeprodukt ferner mindestens ein Getreide umfasst, und ferner optional wobei die Flüssigkeit ferner ein Molkereiprodukt umfasst; und/oder
(b) die Trester von mindestens einer Frucht oder einem Gemüse abgeleitet sind, die bzw. das aus der Gruppe umfassend Orange, Ananas, Apfel, Mango, Moosbeere, Grapefruit, Heidelbeere, Acaifrucht, Erdbeere, Weintraube, Maracuja, Tomate, Zitronen, Limetten, Tangerine, Mandarine, Tangelo, Pampelmuse, Pfirsich, Banane, Birne, Guave, Aprikose, Wassermelone, Granatapfel, Brombeere, Papaya, Litschi, Pflaume, Backpflaume, Feige, Gurke, Grünkohl, Spinat, Brokkoli, Möhre, Sellerie, Rüben, Kopfsalat, Spinat, Weißkohl, Artischocke, Kokosnuss, Brokkoli, Rosenkohl, Blumenkohl, Brunnenkresse, Erbsen, Bohnen, Linsen, Spargel, Radieschen, Weizengras und einer Kombination davon ausgewählt ist.

## Revendications

1. Produit à boire comprenant :
un liquide ; et
25 à 40 % en poids de marc traité par voie enzymatique, dans lequel le marc traité par voie enzymatique dérive d'un marc choisi dans le groupe constitué par au moins un fruit, au moins un légume, ou leurs combinaisons ;
dans lequel le produit à boire a une viscosité, mesurée avec la broche #2 d'un viscosimètre Brookfield à 20 t/min, comprise entre 700 et 1800 cP à 20 °C ; et
dans lequel le produit à boire comprend au moins 1 % en poids de fibres.

2. Produit à boire selon la revendication 1, dans lequel le produit à boire comprend 36 % en poids de marc traité par voie enzymatique, et dans lequel le produit à boire a une viscosité, mesurée avec la broche #2 d'un viscosimètre Brookfield à 20 t/min, comprise entre 1300 et 1500 cP à 20 °C.

3. Produit à boire comprenant :
un liquide ;
25 à 40 % en poids de marc traité par voie enzymatique, dans lequel le marc traité par voie enzymatique dérive d'un marc choisi dans le groupe constitué par au moins un fruit, au moins un légume, ou leurs combinaisons ; et
1 à 40 % en poids d'un ingrédient visqueux et/ou 1 à 20 % en poids d'un ingrédient adjuvant de viscosité ;
dans lequel le produit à boire a une viscosité, mesurée avec la broche #5 d'un viscosimètre Brookfield à 20 t/min, comprise entre 2000 et 4000 cP à 20 °C ; et
dans lequel le produit à boire comprend au moins 1 % en poids de fibres.

4. Produit à boire selon l'une quelconque des revendications 1 à 3, dans lequel le liquide comprend un jus, de préférence dans lequel le jus est choisi dans le groupe comprenant l'orange, l'ananas, la pomme, la mangue, la canneberge, le pamplemousse, la myrtille, l'açaï, la fraise, le raisin, le fruit de la passion, la tomate, le concombre, le chou kalé, l'épinard, le brocoli, la carotte, le citron, le citron vert, la tangerine, l'orange mandarine, le tangelo, le pomelo, le céleri, la betterave, la laitue, l'épinard, le chou, l'artichaut, le brocoli, le chou de Bruxelles, le chou-fleur, le cresson, le pois, le haricot, la lentille, l'asperge, le radis, la pêche, la banane, la poire, la goyave, l'abricot, la pastèque, la grenade, la mûre, la papaye, le lychee, la prune, le pruneau, la figue et leurs combinaisons, éventuellement dans lequel le produit à boire comprend en outre au moins une céréale, et en outre éventuellement dans lequel le liquide comprend en outre un produit laitier.

5. Produit à boire selon l'une quelconque des revendications 1 à 4, dans lequel le marc traité par voie enzymatique est obtenu par traitement du marc avec des enzymes choisies dans le groupe constitué par une pectinase, une cellulase, une hémicellulase, ou leurs combinaisons.

6. Produit à boire selon l'une quelconque des revendications 1 à 5, dans lequel le produit à boire est une boisson à teneur réduite en calories comprenant un édulcorant non nutritif, et dans lequel le profil gustatif du produit à boire à teneur réduite en calories est similaire à une boisson calorique dépourvue de l'édulcorant non nutritif.

7. Produit à boire selon l'une quelconque des revendications 1 à 6, dans lequel le marc dérive d'au moins un fruit ou légume choisi dans le groupe comprenant l'orange, l'ananas, la pomme, la mangue, la canneberge, le pamplemousse, la myrtille, l'açaï, la fraise, le raisin, le fruit de la passion, la tomate, le citron, le citron vert, la tangerine, l'orange mandarine, le tangelo, le pomelo, la pêche, la banane, la poire, la goyave, l'abricot, la pastèque, la grenade, la mûre, la papaye, le lychee, la prune, le pruneau, la figue, le concombre, le chou kalé, l'épinard, le brocoli, la carotte, le céleri, la betterave, la laitue, l'épinard, le chou, l'artichaut, la noix de coco, le brocoli, le chou de Bruxelles, le chou-fleur, le cresson, le pois, le haricot, la lentille, l'asperge, le radis, l'herbe de blé, et leurs combinaisons.

8. Procédé comprenant :
la soumission d'un marc, choisi dans le groupe constitué par au moins un fruit, au moins un légume, ou leurs combinaisons, à au moins une enzyme pour former un mélange de marc-enzyme, dans lequel le marc comprend des fibres et le mélange de marc-enzyme comprend la au moins une enzyme en une quantité comprise entre 0,15 et 1,0 % en poids du marc ;
le chauffage du mélange de marc-enzyme à 25-57 °C pendant 10 à 60 minutes ; et
la désactivation de la au moins une enzyme pour former le marc traité par voie enzymatique ;
dans lequel le marc traité par voie enzymatique comprend une quantité de fibres qui est identique avant et après le traitement enzymatique, et dans lequel les fibres dans le marc traité par voie enzymatique ont une longueur de chaîne plus petite que celle des fibres natives dans le marc avant le traitement enzymatique ;
le procédé comprenant en outre l'ajout du marc traité par voie enzymatique à un liquide pour former un produit à boire comprenant au moins 1 % en poids de fibres, dans lequel le marc traité par voie enzymatique est ajouté en une quantité comprise entre 25 et 40 % en poids du produit à boire, et dans lequel la viscosité du produit à boire, mesurée avec la broche #2 d'un viscosimètre Brookfield à 20 t/min, est de 700 à 1800 cP à 20 °C, éventuellement dans lequel la quantité de marc traité par voie enzymatique est de 36 % en poids du produit à boire, et dans lequel la viscosité, mesurée avec la broche #2 d'un viscosimètre Brookfield à 20 t/min, est comprise entre 1300 et 1500 cP à 20 °C.

9. Procédé comprenant :
la soumission d'un marc, choisi dans le groupe constitué par au moins un fruit, au moins un légume, ou leurs combinaisons, à au moins une enzyme pour former un mélange de marc-enzyme, dans lequel le marc comprend des fibres et le mélange de marc-enzyme comprend la au moins une enzyme en une quantité comprise entre 0,15 et 1,0 % en poids du marc ;
le chauffage du mélange de marc-enzyme à 25-57 °C pendant 10 à 60 minutes ; et
la désactivation de la au moins une enzyme pour former le marc traité par voie enzymatique ;
dans lequel le marc traité par voie enzymatique comprend une quantité de fibres qui est identique avant et après le traitement enzymatique, et dans lequel les fibres dans le marc traité par voie enzymatique ont une longueur de chaîne plus petite que celle des fibres natives dans le marc avant le traitement enzymatique ;
le procédé comprenant en outre l'ajout a) d'un ingrédient visqueux et/ou d'un ingrédient adjuvant de viscosité et b) du marc traité par voie enzymatique à un liquide pour former un produit à boire comprenant au moins 1 % en poids de fibres, dans lequel le marc traité par voie enzymatique est ajouté en une quantité comprise entre 25 et 40 % en poids du produit à boire, dans lequel tout ingrédient visqueux est ajouté en une quantité comprise entre 1 et 40 % en poids du produit à boire et tout ingrédient adjuvant de viscosité est ajouté en une quantité de 1 à 20 % en poids du produit à boire, et dans lequel la viscosité du produit à boire, mesurée avec la broche #5 d'un viscosimètre Brookfield à 20 t/min, est de 2000 à 4000 cP à 20 °C.

10. Procédé selon la revendication 8 ou 9, dans lequel la plage de la au moins une enzyme est comprise entre 0,15 et 0,75 % en poids du marc, éventuellement le procédé comprenant en outre : l'agitation du mélange de marc-enzyme durant l'étape de chauffage.

11. Procédé selon l'une quelconque des revendications 8 à 10, dans lequel le marc contient une teneur en fibres comprise entre 3 et 8 % en poids.

12. Procédé selon l'une quelconque des revendications 8 à 11, dans lequel l'enzyme est une pectinase, une hémicellulase, une cellulase, ou l'une quelconque de leurs combinaisons.

13. Procédé selon l'une quelconque des revendications 8 à 12, comprenant en outre : la désactivation de l'enzyme par chauffage du mélange de marc-enzyme à 75-107 °C pendant 6 à 600 secondes.

14. Procédé selon l'une quelconque des revendications 8 à 13, comprenant en outre : la réduction de la granulométrie du marc traité par voie enzymatique, éventuellement dans lequel la granulométrie du marc traité par voie enzymatique est réduite par des traitements choisis dans le groupe constitué par une micronisation, une homogénéisation, ou leurs combinaisons.

15. Procédé selon l'une quelconque des revendications 8 à 14, dans lequel
(a) le liquide comprend un jus, de préférence dans lequel le jus est choisi dans le groupe comprenant l'orange, l'ananas, la pomme, la mangue, la canneberge, le pamplemousse, la myrtille, l'açaï, la fraise, le raisin, le fruit de la passion, la tomate, le concombre, le chou kalé, l'épinard, le brocoli, la carotte, le citron, le citron vert, la tangerine, l'orange mandarine, le tangelo, le pomelo, le céleri, la betterave, la laitue, l'épinard, le chou, l'artichaut, le brocoli, le chou de Bruxelles, le chou-fleur, le cresson, le pois, le haricot, la lentille, l'asperge, le radis, la pêche, la banane, la poire, la goyave, l'abricot, la pastèque, la grenade, la mûre, la papaye, le lychee, la prune, le pruneau, la figue et leurs combinaisons, éventuellement dans lequel le produit à boire comprend en outre au moins une céréale, et en outre éventuellement dans lequel le liquide comprend en outre un produit laitier ; et/ou
(b) le marc dérive d'au moins un fruit ou légume choisi dans le groupe comprenant l'orange, l'ananas, la pomme, la mangue, la canneberge, le pamplemousse, la myrtille, l'açaï, la fraise, le raisin, le fruit de la passion, la tomate, le citron, le citron vert, la tangerine, l'orange mandarine, le tangelo, le pomelo, la pêche, la banane, la poire, la goyave, l'abricot, la pastèque, la grenade, la mûre, la papaye, le lychee, la prune, le pruneau, la figue, le concombre, le chou kalé, l'épinard, le brocoli, la carotte, le céleri, la betterave, la laitue, l'épinard, le chou, l'artichaut, la noix de coco, le brocoli, le chou de Bruxelles, le chou-fleur, le cresson, le pois, le haricot, la lentille, l'asperge, le radis, l'herbe de blé, et leurs combinaisons.
